# EUROPEAN PATENT APPLICATION

(11) **EP 4 545 229 A1**
(43) Date of publication of application: **30.04.2025**
(21) Application number: 23205598.8
(22) Date of filing: 24.10.2023
(51) Int. Cl.: B23C 5/10, B23C 5/00

(54) **END MILL WITH ARCUATE CUTTING EDGES**

(71) Applicant: AB Sandvik Coromant, 811 81 Sandviken (SE)
(72) Inventor: PITTALA, Gaetano, 811 81 Sandviken (SE)
(74) Representative: Sandvik

(57) **Abstract**

The invention relates to a milling tool (40, 50, 60) having a first cutting portion (24, 25, 26) comprising a first (41, 51, 61) and a second (42, 52, 62) cutting edge extending at the periphery of the first cutting portion along, or following a helical path around, a longitudinal axis (L) of the milling tool. The first and second cutting edges are arranged such that, when the milling tool is rotated around its longitudinal axis (L), they form respective first (41', 51', 61') and second (42', 52', 62') lines of intersection in a central plane (CP) containing the longitudinal axis (L), wherein the first and the second lines of intersection are arcuate. The extension of the first cutting edge is different from the extension of the second cutting edge such that the first line of intersection is different from the second line of intersection.

## Description

### TECHNICAL FIELD

The invention relates to milling tools, in particular milling tools for metal cutting.

### BACKGROUND ART

Many different types of milling tools for cutting metal are known. One common type of milling cutter is the cylindrical end mill having peripheral cutting edges that form a cylindrically shaped locus during rotation of the end mill around its longitudinal axis. Another type of end mill is the ball-nose end mill having curved end cutting edges at the front forming a hemi-spherically shaped locus during rotation of the tool. Such ball-nose end mill may be used for profile milling. Other types of end mills may have curved cutting edges that do not form a hemi-spherically shaped locus when rotated, but wherein the cutting edges form segments of large-diameter arcs (i.e., having a radius of curvature that is greater than the tool diameter). Such end mills are sometimes referred to as barrel end mills or barrel milling cutters.

When using any of these different types of milling tools, problems with vibration and stability may occur due to high cutting forces, in particular when using high cutting speeds.

### SUMMARY

It is an object of the present invention to mitigate the shortcomings of the prior art and to provide a milling tool with increased stability when using high cutting speeds. This is achieved by a milling tool having a geometry that results in reduced cutting forces.

Thus, according to a first aspect, the invention relates to a milling tool having a first cutting portion comprising a first and a second cutting edge extending at the periphery of the first cutting portion along, or following a helical path around, a longitudinal axis of the milling tool. The cutting edges are arranged such that, when the milling tool is rotated around its longitudinal axis, the first and the second cutting edges form respective first and second lines of intersection in a central plane containing the longitudinal axis, wherein the first and the second lines of intersection are arcuate. The extension of the first cutting edge is different from the extension of the second cutting edge such that the first line of intersection is different from the second line of intersection.

The line of intersection corresponds to the profile of the locus formed by the cutting edge during rotation of the milling tool around its longitudinal axis, i.e., the profile of the rotational trajectory of the cutting edge, and is sometimes simply referred to as the profile of the cutting edge.

According to the present disclosure, the first line of intersection and the second line of intersection are arcuate. Since the line of intersection is arcuate, the radial distance to the cutting edge from the longitudinal axis varies along the extension of the cutting edge.

Moreover, since the respective lines of intersection are different, the first and the second cutting edges are, at each of a plurality of axial locations along the first cutting portion, located at respective radial distances from the longitudinal axis that are different from each other.

In general, arcuate cutting edges, i.e., cutting edges having arcuate profiles, as used in ball nose end mills or barrel end mills, lead to improved friction at the cutting edge, reduced cutting forces and thereby increased stability. This can be beneficial for example when machining in aluminum where lower friction is needed. The inventor has found that when using such arcuate cutting edges in combination with different extensions or profiles of different cutting edges, the cutting forces are reduced, and the stability improved even further. It has been found that in some cases the cutting forces may be significantly reduced even when using a difference between the respective extensions of the arcuate cutting edges that is small enough to not cause any significant, or even detectable, form errors of the machined workpiece surface. Even though the differently curved cutting edges may cause increased tool wear due to the variable chip thickness, it has been found that in many machining operations the benefits of the reduced cutting forces (and thereby improved stability) may outweigh such disadvantage. The inventor has found that the design is applicable also for milling tools that do not normally have arcuate cutting edges, e.g., cylindrical end mills, as will be described further below.

The expression "arcuate", as used herein in relation to a cutting edge, should be understood as a path with respect to the longitudinal axis that is arcuate in such way that the distance to the longitudinal axis changes along the path, i.e., wherein the line of intersection of the cutting edge in a central plane containing the longitudinal axis is arcuate. Accordingly, the twisting path of a conventional helical cutting edge *around* the longitudinal axis does not correspond an arcuate extension of the cutting edge as used in the present disclosure.

An arcuate line of intersection is not necessarily formed by a single radius of curvature but can be formed by two or more interconnected arc segments having different radii of curvature.

Each cutting edge may be arranged at an intersection between a clearance face on a tooth and a rake face in a flute, wherein the teeth and the flutes thus extend axially along the cutting portion of the milling tool in a similar manner as the cutting edges. The milling tool has at least two teeth, and may include for example three, four, five, or even more teeth, and a corresponding number of flutes. Hence, the milling tool may include further cutting edges in addition to the first and the second cutting edges. The milling tool may be a solid milling tool. The milling tool may also be of the exchangeable head type, i.e., wherein the first cutting portion is part of a cutting head that is attachable, for example via a threaded connection, to a shank section. The milling tool, or at least a part of the milling tool including the first cutting portion, may be made from a wear resistant material, such as cemented carbide.

The first cutting portion may correspond to the full length of an entire cutting portion of the milling tool. Alternatively, the entire cutting portion may include not only the first cutting portion but also a second cutting portion in which the cutting edges continues, for example as non-arcuate cutting edges. As an example, each of the first and the second cutting edge may include a non-arcuate section (in the second cutting portion) that, at a certain axial location along the milling tool, transitions into an arcuate section (in the first cutting portion). This may for example be the case for some types of ball-nose end mills having conventional non-arcuate peripheral cutting edges that transition into arcuate ball-nosed end cutting edges extending towards the tip of the end mill.

Each arcuate cutting edge is preferably continuously curved in one direction and not wave-shaped or having an otherwise periodically changing configuration. Accordingly, each of the first and the second lines of intersection may be strictly convex curves (although, as already discussed, not necessarily having a single radius of curvature, but possibly formed by multiple segments having different radii of curvature). In other words, the first and second lines of intersection may bulge radially outwards from the longitudinal axis. For some types of milling tools, it is also envisaged that one or both of the first and second lines of intersection are strictly concave curves, i.e., bulging radially inwards toward the longitudinal axis.

According to some embodiments, all parts of each of the first and the second lines of intersection have a radius of curvature that is greater than, or is the same as, or substantially the same as, the maximum radial distance from the longitudinal axis to the respective first and second cutting edge in the first cutting portion.

If considering a "nominal" cutting edge as a non-modified cutting edge corresponding to the desired cutting edge profile, i.e. having an extension that, absent the present invention, would have been used for all the cutting edges, the idea of the differently extending cutting edges according to the invention is to use a geometry that differs only slightly from the respective nominal cutting edges, preferably not more than required to obtain a sufficient reduction of the cutting forces.

For a ball nose end mill, the radius of curvature of the first and second lines of intersection may be relatively close to (e.g. the same as, or at least substantially the same as) the maximum radial distance from the longitudinal axis to the cutting edge in the first cutting portion, whereas the radius of curvature of the first and second lines of intersection for a barrel end mill or a cylindrical end mill will normally be much greater than the maximum radial distance from the longitudinal axis to the cutting edge in the first cutting portion.

Hence, a nominal line of intersection, formed by a nominal cutting edge in the central plane upon rotation of the tool, would be fairly close to the first and second lines of intersection and would have a curvature that is either the same as, or slightly greater or slightly smaller than, the curvature of the first and/or second lines of intersection.

According to some embodiments, at each point along the first line of intersection, the shortest distance to the second line of intersection is less than 2% of the maximum cutting diameter of the first cutting portion.

Correspondingly, at least for milling tools having a basic geometry corresponding to a barrel end mill or a cylindrical end mill, at any axial location along the first cutting portion, the difference between the radial distance from the longitudinal axis to the first cutting edge and the radial distance from the longitudinal axis to the second cutting edge may be less than 2% of the maximum cutting diameter of the first cutting portion.

A distance between the first and second lines of intersection that is not more than 2% of the maximum cutting diameter of the first cutting portion may ensure that a resulting machined surface will not deviate too much from what would have been obtained with a corresponding conventional milling tool with identical cutting edges, and also ensure that the tool wear will not be too great.

For example, at each point along the first line of intersection, the shortest distance to the second line of intersection may be less than 1% of the maximum cutting diameter of the first cutting portion.

The maximum cutting diameter of the first cutting portion should be understood as the maximum diameter in a radial direction of the locus formed by the cutting edges in the first cutting portion when the tool is rotated around its longitudinal axis, and thus corresponds to the maximum distance in a radial direction in the central plane between the line of intersection formed by a cutting edge in the first cutting portion at one side of the longitudinal axis to the corresponding line of intersection formed in the central plane by the cutting edge at the other side of the longitudinal axis.

The first and the second lines of intersection may cross or meet each other at one or more points along their extension. In other words, the shortest distance from the first line of intersection to the second line of intersection may be zero, at one or more points along the first line of intersection. Hence, the first and the second cutting edges are, at one or more axial locations along the first cutting portion, located at the same radial distance from the longitudinal axis. Accordingly, the first and the second cutting edges may be located at respective radial distances from the longitudinal axis that are different from each other at a majority of, but not all, axial locations along the first cutting portion.

Correspondingly, the shortest distance from the first line of intersection to the second line of intersection may have a maximum value at one or more points along the first line of intersection. The maximum value may be at least 0.1% of the maximum cutting diameter of the first cutting portion. Thereby, a sufficient reduction of the cutting forces may be achieved.

For example, the maximum value may be in a range of 0.1% - 2%, for example in a range of 0.1% - 1%, of the maximum cutting diameter of the first cutting portion.

According to some embodiments, the maximum value may be at least 0.2%, such as at least 0.3%, such as, for example, 0.4%, of the maximum cutting diameter of the first cutting portion. As an example, for a milling tool in the form of a barrel end mill, a maximum value in the range of 0.2% - 0.6%, such as a maximum value in the range of 0.3% - 0.5%, of the maximum cutting diameter of the first cutting portion may be suitable.

For other embodiments, such as embodiments relating to milling tools having a general geometry corresponding to a cylindrical end mill, an even smaller maximum value may be beneficial, such as a maximum value in the range of 0.1% - 0.5%, such as a value in the range of 0.1% - 0.3%, of the maximum cutting diameter of the first cutting portion.

In any case, the maximum value should preferably be greater than any random deviations that may occur in accordance with defined tolerances. For example, the maximum value should be greater than any pre-defined value on acceptable radial runout for a corresponding conventional tool, and significantly greater, such as at least two times greater, e.g., at least three or four times greater, than a profile tolerance on each cutting edge.

Along the first line of intersection, the shortest distance to the second line of intersection may vary between zero and the maximum value. The variation may be continuous and uniform and not involve any sudden changes.

For example, the first and the second lines of intersection may cross or meet each other at exactly one location. As another example, the first and the second lines of intersection may cross or meet each other at exactly two locations.

As an example, the first and the second cutting edges may be located at the same radial distance from the longitudinal axis at exactly two axial locations along the first cutting portion, such as the axial start- and end points (i.e., axial extreme points) of the first and second cutting edges in the first cutting portion. This would correspond to a configuration where the first and second arcuate cutting edges start and end at corresponding radial distances from the longitudinal axis but have different curvature. Such configuration may for example be used for a ball nose end mill or a barrel end mill.

Hence, according to some embodiments, the curvature of the first line of intersection is different from the curvature of the second line of intersection.

"Curvature" in this context should be understood as a degree of deviation from a linear extension. As already discussed, it does not imply that the cutting edge necessarily has an extension along a single circular segment (i.e., a curvature defined by a single radius of curvature).

In other embodiments, the curvature of the first line of intersection is the same as the curvature of the second line of intersection. In such case, the difference between the first and second lines of intersection may result simply from a configuration wherein the first and the second cutting edges do not start and end at the same radial distance from the longitudinal axis.

For example, the first and the second arcuate cutting edges may be located at the same radial distance from the longitudinal axis at exactly one axial location along the first cutting portion, such as an axial location halfway along the first and second cutting edge in the first cutting portion. This would for example correspond to a configuration wherein the first cutting edge, with respect to the second cutting edge, starts at a greater radial distance from the longitudinal axis, but ends at a smaller radial distance, or vice versa. In such case, the curvature of the first line of intersection may be the same as the curvature of the second line of intersection. Such configuration may for example be suitable for a cylindrical end mill wherein the rotational trajectories of the first and second arcuate cutting edges are supposed to jointly form a surface that is an approximation of a cylindrical surface, as will be described further below.

The first cutting portion may include a nominal cutting edge that, when the milling tool is rotated around its longitudinal axis, forms a nominal line of intersection in the central plane. For some embodiments, it is envisaged that the first or the second line of intersection (but obviously not both) is the nominal cutting edge. It may be preferred, though, that both the first line of intersection and the second line of intersection are different from a nominal line of intersection. However, in such embodiments, the first cutting portion may nevertheless include a nominal cutting edge.

Hence, first and second arcuate cutting edges may be combined with one or more nominal cutting edges. For some milling tools, such as a ball-nose end mill or a barrel end mill, the nominal cutting edge would still be an arcuate cutting edge. However, for a cylindrical end mill, the nominal cutting edge would be a non-arcuate cutting edge, i.e., wherein the nominal line of intersection is a straight line parallel to the longitudinal axis.

The milling tool may include more than one nominal cutting edges, each forming a nominal line of intersection in the central plane when the milling tool is rotated around its longitudinal axis.

According to some embodiments, the first cutting portion further comprises a first supplementary cutting edge and a second supplementary cutting edge, wherein, when the milling tool is rotated around its longitudinal axis, the first supplementary cutting edge forms a line of intersection in the central plane that is the same as the first line of intersection, and the second supplementary cutting edge forms a line of intersection in the central plane that is the same as the second line of intersection. Accordingly, in such embodiments the first supplementary cutting edge has a corresponding profile as the first cutting edge, and the second supplementary cutting edge has a corresponding profile as the second cutting edge.

According to some embodiments, the first cutting portion comprises one or more additional cutting edges, wherein at least one of the additional cutting edges has an extension that is different from the extension of the first and the second cutting edges, such that, when the milling tool is rotated around its longitudinal axis, the at least one of the additional cutting edges forms a line of intersection in the central plane that is different from the first and the second lines of intersection.

According to some embodiments, the first and the second cutting edges are arranged such that rotational trajectories thereof around the longitudinal axis jointly form an approximation of a cylindrical surface. Thereby, a milling tool corresponding to a conventional cylindrical end mill is obtained even though one or more cutting edges have an arcuate profile. Thus, the benefits of reduced cutting forces due to differently extending arcuate cutting edges is obtained also in view of a milling tool having a basic shape of a cylindrical end mill, i.e., an end mill for machining flat surfaces. Due to the arcuate cutting edges according to the present disclosure, the cutting edges do not form a completely cylindrical locus upon rotation of the tool, but rather an approximation of a cylindrical surface. Accordingly, in this case, the different arcuate extensions of the different cutting edges do not only reduce the cutting forces but are preferably configured such that the cutting edges when combined provide a rotational locus that is a good approximation of a cylindrical surface.

The approximation of a cylindrical surface may be achieved by an arcuate extension of the first line of intersection that, from a front side of the first cutting portion and in a direction towards a rear (shank) of the milling tool, has a start point located at a first radial distance from the longitudinal axis and an end point at a second radial distance from the longitudinal axis, wherein the first and second radial distances are different from each other, and wherein an arcuate extension of the second line of intersection, from a front side of the first cutting potion and in a direction towards the rear of the milling tool, has a start point located at the second radial distance from the longitudinal axis and an end point located at the first radial distance from the longitudinal axis. In such case, the curvature of the first line of intersection may be the same as the curvature of the second line of intersection, and the respective lines of intersection may cross each other at a location halfway along their extension. The first and second lines of intersection may be strictly convex curves. It is also envisaged that the first and second lines of intersection are strictly concave curves.

Hence, an upper part of the first line of intersection and a lower part of the second line of intersection, or vice versa, may together form an approximation of a straight line, approximating a nominal line of intersection, i.e., the resulting line of intersection caused by a nominal cutting edge that forms a cylindrically shaped locus when the milling tool is rotated around its longitudinal axis. In some embodiments, the milling tool may also include one or more such nominal cutting edges in addition to the first and the second arcuate cutting edges. Such design may be more cost-effective compared to a design wherein all cutting edges are arcuate, and still provide a sufficient reduction of the cutting forces.

An alternative, and potentially even more accurate, approximation of a cylindrical rotation locus may be achieved by the combination of more than two arcuate cutting edges having different extension (i.e., resulting in different lines of intersection).

Hence, the first cutting portion may comprise at least one additional arcuate cutting edge that has an extension that is different from the extension of the first and the second cutting edges, such that, when the milling tool is rotated around its longitudinal axis, the at least one additional arcuate cutting edge forms an arcuate line of intersection in the central plane that is different from the first and the second lines of intersection, and wherein the first, the second and the at least one additional arcuate cutting edge are arranged such that rotational trajectories thereof around the longitudinal axis jointly form an approximation of a cylindrical surface.

As an example, the first and second lines of intersection may be strictly convex curves having a first radius of curvature, but starting and ending at different radial distances from the longitudinal axis of the milling tool, whereas an additional line of intersection, that is formed in the central plane by an additional cutting edge when the milling tool is rotated around its axis, may be a strictly convex curve that has the same or a different, e.g., greater, radius of curvature compared to the radius of curvature of the first and second lines of intersection. Such third line of intersection may, at its start point, be located at the same radial distance from the longitudinal axis as the first line of intersection, and, at its end point, at the same radial distance from the longitudinal axis as the second line of intersection, or vice versa. Alternatively, the third line of intersection may start and end at a different radial distance from the longitudinal axis, for example at a distance that is somewhere in between the respective start and end points of the first and second lines of intersection.

### BRIEF DESCRIPTION OF DRAWINGS

The solution will now be described in more detail by means of exemplary embodiments and with reference to the accompanying drawings, in which:
Figs. 1A-1B show a cylindrical end mill according to the prior art.
Figs. 2A-2B show a ball nose end mill according to the prior art.
Figs. 3A-3B show a barrel end mill according to the prior art.
Fig. 4A-4B show a milling tool according to a first embodiment of the invention.
Fig. 5A-5B show a milling tool according to a second embodiment of the invention.
Fig. 6A-6B show a milling tool according to a third embodiment of the invention.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

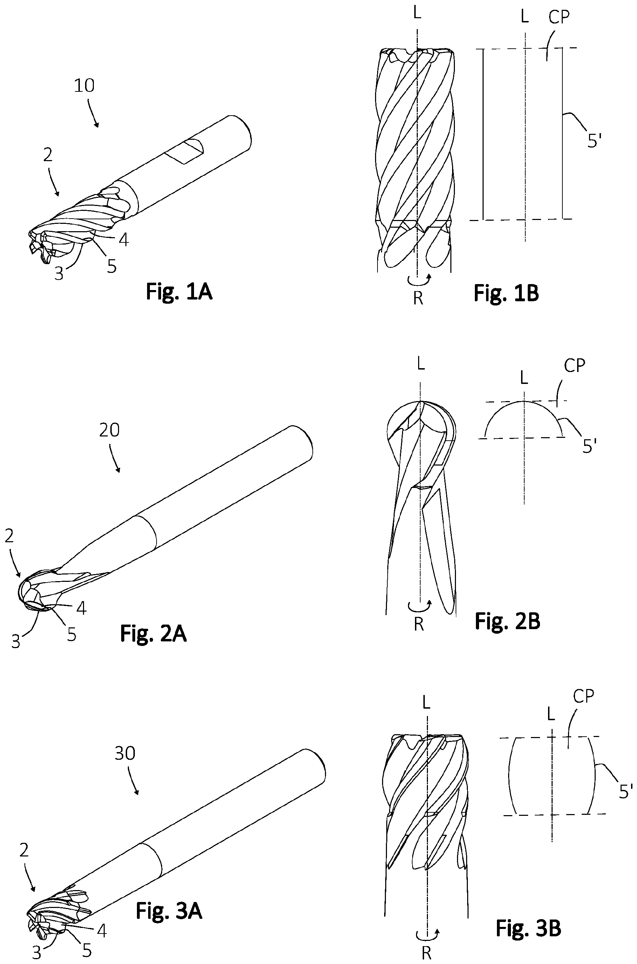

Figs. 1-3 illustrate different variants of milling tools according to the prior art.

Figs 1A-1B illustrate a milling tool in the form of a cylindrical end mill 10 having a cutting portion 2 including five helical teeth 3 and a corresponding number of flutes 4 that extend along a longitudinal axis L, around which the tool is rotatable in a rotation direction R. Each tooth 3 includes a cutting edge 5 formed at the intersection between a clearance face on the tooth 3 and a rake face in the flute 4, such that each cutting edge extends along the periphery of the cutting portion 2 following a helical path around the longitudinal axis L.

Fig. 1B further shows a central plane CP that contains the longitudinal axis Land schematically illustrates lines of intersection 5' that the cutting edges 5 would form in the central plane CP when the end mill 10 is rotated around the longitudinal axis L in the rotation direction R. Since the cutting edges 5 are symmetrically arranged with respect to the longitudinal axis, all the corresponding lines of intersection 5' coincide. As can be seen in the figure, the lines of intersection 5' for a conventional cylindrical end mill are straight lines that are parallel to the longitudinal axis L.

Figs. 2A-2B are corresponding illustrations of a milling tool and the resulting lines of intersection 5' formed in a central plane CP, but in this case for a ball nose end mill 20 having two arcuate cutting edges 5. As seen in fig. 2B, the lines of intersection 5' corresponds to a semicircle of which the radius of curvature corresponds to a maximum distance between the longitudinal axis L and a cutting edge.

Figs. 3A-3B are corresponding illustrations of a milling tool and the resulting lines of intersection 5' formed in a central plane CP, but in this case for an barrel end mill 30 having five arcuate cutting edges 5 that are arranged such that the corresponding lines of intersection 5' are convexly arcuate with a radius of curvature that is much greater than a maximum distance between the longitudinal axis L and a cutting edge in the cutting portion 2.

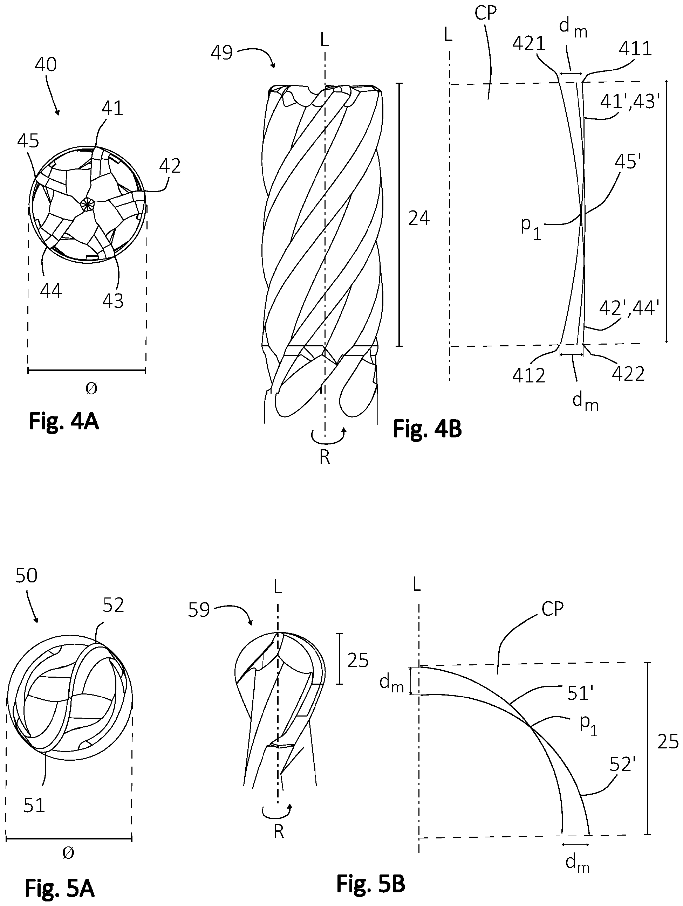

Figs. 4A-4B illustrate a milling tool 40 according to a first embodiment of the invention. The milling tool 40 is shown in a front view in Fig. 4A, i.e., as seen from a direction along the longitudinal axis L towards a front end 49 of the milling tool. The milling tool 40 includes a first cutting portion 24. The general geometry of the milling tool 40 corresponds to a cylindrical end mill, i.e., a milling tool as illustrated in Figs. 1A-1B, but differs from a conventional cylindrical end mill in that some of the cutting edges 41, 42, 43, 44, 45 have a slightly different extension along the peripheral surface of the first cutting portion 24. As seen in fig. 4B, the first cutting edge 41 forms a first arcuate line of intersection 41 ' in the central plane CP when the tool is rotated around its longitudinal axis L, whereas the second cutting edge 42 forms a second arcuate line of intersection 42' that is different from the first arcuate line of intersection 41'.

The milling tool 40 also includes a first supplementary cutting edge 43 that has a similar extension as the first cutting edge, thereby forming an arcuate line of intersection 43' that is the same as the first arcuate line of intersection 41', and a second supplementary cutting edge 44 that has a similar extension as the second cutting edge, thereby forming an arcuate line of intersection 44' that is the same as the second arcuate line of intersection 42'.

The front half (the part closest to the front end 49 of the end mill) of the first line of intersection 41' and the rear half (the part closest to the shank of the end mill) of the second line of intersection 42' together form an approximation of a straight line that is parallel with the longitudinal axis. Thus, the first and the second cutting edges 41, 42 are arranged such that rotational trajectories thereof around the longitudinal axis L jointly form an approximation of a cylindrical surface.

In the illustrated embodiment, however, the first cutting portion 24 also includes an additional cutting edge 45 that has a different extension, and a different curvature, than any of the first and second cutting edges. The additional cutting edge 45 forms an additional arcuate line of intersection 45' in the central plane CP when the tool is rotated around its longitudinal axis L. As can be seen in fig. 4B, the additional line of intersection 45' will, together with the first and second lines of intersection 41', 42', form an even better approximation of a straight line. Accordingly, the first, the second and the additional cutting edges 41,42,45 are arranged such that rotational trajectories thereof around the longitudinal axis L jointly form a very accurate approximation of a cylindrical surface.

As seen in fig. 4B, the first line of intersection 41' has, from a front end 49 of the milling tool and in a direction towards a rear (shank) of the milling tool, a start point 411 located at a greater radial distance from the longitudinal axis L than a corresponding start point 421 of the second line of intersection 42'. Correspondingly, the first line of intersection 41' has an end point 412 located at a smaller radial distance from the longitudinal axis L than a corresponding end point 422 of the second line of intersection 42'. The first and second lines of intersection 41', 42' have the same radius of curvature (but different extensions along the longitudinal axis).

In the illustrated embodiment, the additional line of intersection 45' has a different (greater) radius of curvature and has respective start- and end points located at a radial distance from the longitudinal axis L that is in between the respective radial distances at which the start- and end points of the first and second lines of intersection 41', 42' are located.

The first and second lines of intersection 41', 42' cross each other halfway along their extension at a point pi. In the illustrated embodiment, the shortest distance from any point on the first line of intersection 41' to the second line of intersection 42' is less than about 0.2% of the maximum cutting diameter Ø of the first cutting portion 24. The maximum value dₘ of the shortest distance from the first line of intersection 41' to the second line of intersection 42' is found at the respective start- and end points 411, 412 of the first line of intersection 41'. As an example, for an end mill having a maximum cutting diameter Ø of 12 mm, the maximum value dₘ could be as small as 0.02 mm (i.e., corresponding to 0.17% of the maximum cutting diameter Ø), or even less. Nevertheless, with a tight cutting profile tolerance on each tooth, for example a tolerance of ±0.005 mm, a sufficient distance between the first and second lines of intersection is still assured.

Figs. 5A-5B illustrate a milling tool 50 according to a second embodiment of the invention. The milling tool 50 is shown in a front view in Fig. 5A, i.e., as seen from a direction along the longitudinal axis L towards a front end 59 of the milling tool. The milling tool 50 includes a first cutting portion 25. The general geometry of the milling tool 50 corresponds to a ball nose end mill, i.e., a milling tool as illustrated in Figs. 2A-2B, but differs from a conventional ball nose end mill in that the cutting edges 51, 52 have a slightly different extension along the peripheral surface of the first cutting portion 25. As seen in fig. 5B, the first cutting edge 51 forms a first arcuate line of intersection 51' in the central plane CP when the tool is rotated around its longitudinal axis L, whereas the second cutting edge 52 forms a second arcuate line of intersection 52' that is different from the first arcuate line of intersection 51'.

The first line of intersection 51' and the second line of intersection 52' has different extensions but similar radii of curvature and cross each other at a point pi located halfway along the respective lines of intersection.

In the illustrated embodiment, the shortest distance from any point on the first line of intersection 51' to the second line of intersection 52' is less than about 0.4% of the maximum cutting diameter Ø of the first cutting portion 25. The maximum value dₘ of the shortest distance from the first line of intersection 51' to the second line of intersection 52' is found at the respective start- and end points of the lines of intersection. The maximum value dₘ is in this case about 0.4% of the maximum cutting diameter Ø of the first cutting portion 25.

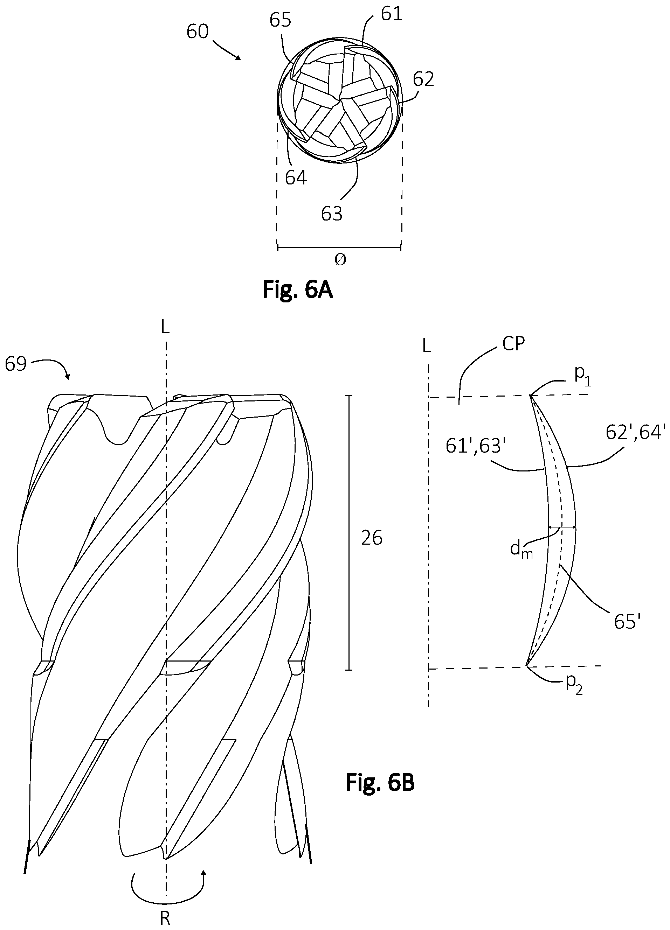

Figs. 6A-6B illustrate a milling tool 60 according to a third embodiment of the invention. The milling tool 60 is shown in a front view in Fig. 6A, i.e., as seen from a direction along the longitudinal axis L towards a front end 69 of the milling tool. The milling tool 60 includes a first cutting portion 26. The general geometry of the milling tool 60 corresponds to a barrel end mill, i.e., a milling tool as illustrated in Figs. 3A-3B, but differs from a conventional barrel end mill in that some of the cutting edges 61, 62, 63, 64, 65 have a slightly different extension along the peripheral surface of the first cutting portion 25. As seen in fig. 6B, the first cutting edge 61 forms a first arcuate line of intersection 61' in the central plane CP when the tool is rotated around its longitudinal axis L, whereas the second cutting edge 62 forms a second arcuate line of intersection 62' that is different from the first arcuate line of intersection 61'.

The milling tool 60 also includes a first supplementary cutting edge 63 that has a similar extension as the first cutting edge, thereby forming an arcuate line of intersection 63' that is the same as the first arcuate line of intersection 61', and a second supplementary cutting edge 64 that has a similar extension as the second cutting edge 62, thereby forming an arcuate line of intersection 64' that is the same as the second arcuate line of intersection 62'.

In the illustrated embodiment, the first cutting portion 26 also includes a nominal cutting edge 65 that has a different extension, and a different curvature, than any of the first and second cutting edges. The nominal cutting edge 65 forms a nominal line of intersection 65' (illustrated by a dashed line) in the central plane CP when the tool is rotated around its longitudinal axis L. The nominal cutting edge 65, and the nominal line of intersection 65', corresponds to an extension that all cutting edges of the barrel end mill would have had absent the present invention, i.e., according to a conventional barrel end mill wherein all cutting edges form the same lines of intersection in the central plane.

As seen in fig. 6B, the first line of intersection 61' has, from the front end 69 of the milling tool and in a direction towards a rear (shank) of the milling tool, a start point located at the same radial distance from the longitudinal axis L as a corresponding start point of the second line of intersection 62'. Correspondingly, the first line of intersection 61' has an end point located at the same radial distance from the longitudinal axis L as the corresponding end point of the second line of intersection 62'. These start- and end points are the same as the start- and end points of the nominal line of intersection 65'. Hence, the first and second lines of intersection (and in this case also the nominal line of intersection) meet at exactly two points p₁ and p₂ corresponding to the start- and end points of the respective lines of intersection.

The first and second lines of intersection 61', 62' have different radii of curvature, resulting in that the first line of intersection 61' is different from the second line of intersection 62' even though the first and second cutting edges 61, 62 start and end at the same radial distances from the longitudinal axis. The first line of intersection 61' has a radius of curvature that is somewhat greater than the nominal radius of curvature of the nominal line of intersection 65', and the second line of intersection 62' has a radius of curvature that is somewhat smaller than the nominal radius of curvature of the nominal line of intersection 65'.

In the illustrated embodiment, the shortest distance from any point on the first line of intersection 61' to the second line of intersection 62' is less than about 0.4% of the maximum cutting diameter Ø of the first cutting portion 26. The maximum value dₘ of the shortest distance from the first line of intersection 61' to the second line of intersection 62' is found at a location half-way along the first line of intersection 61'. The maximum value dₘ is in this case about 0.4% of the maximum cutting diameter Ø of the first cutting portion 26.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A milling tool (40, 50, 60) having a first cutting portion (24, 25, 26) comprising a first (41, 51, 61) and a second (42, 52, 62) cutting edge extending at the periphery of the first cutting portion along, or following a helical path around, a longitudinal axis (L) of the milling tool, wherein, when the milling tool is rotated around its longitudinal axis (L), the first and the second cutting edges form respective first (41', 51', 61') and second (42', 52', 62') lines of intersection in a central plane (CP) containing the longitudinal axis (L), wherein the first and the second lines of intersection are arcuate, **characterized in that** the extension of the first cutting edge is different from the extension of the second cutting edge such that the first line of intersection is different from the second line of intersection.

2. A milling tool according to claim 1, wherein the first and the second lines of intersection are strictly convex curves.

3. A milling tool according to any of the previous claims, wherein all parts of each of the first and the second lines of intersection have a radius of curvature that is greater than, or is the same as, or substantially the same as, the maximum radial distance from the longitudinal axis to the respective first and second cutting edge in the first cutting portion.

4. A milling tool according to any of the previous claims, wherein, at each point along the first line of intersection, the shortest distance to the second line of intersection is less than 2% of the maximum cutting diameter of the first cutting portion.

5. A milling tool according to any of the previous claims, wherein the first and the second lines of intersection cross or meet each other at one or more points along their extension.

6. A milling tool according to any of the previous claims, wherein the shortest distance from the first line of intersection to the second line of intersection has a maximum value (dₘ) at one or more points along the first line of intersection.

7. A milling tool according to claim 6, wherein the maximum value (dₘ) is at least 0.1% of the maximum cutting diameter of the first cutting portion.

8. A milling tool according to any of the claims 6-7, wherein, along the first line of intersection, the shortest distance to the second line of intersection varies between zero and the maximum value.

9. A milling tool according to any of the previous claims, wherein the curvature of the first line of intersection is different from the curvature of the second line of intersection.

10. A milling tool according to any of the previous claims, wherein the first cutting portion further comprises a first supplementary cutting edge and a second supplementary cutting edge, wherein, when the milling tool is rotated around its longitudinal axis, the first supplementary cutting edge forms a line of intersection in the central plane that is the same as the first line of intersection, and the second supplementary cutting edge forms a line of intersection in the central plane that is the same as the second line of intersection.

11. A milling tool according to any of the previous claims, wherein the first cutting portion comprises one or more additional cutting edges, wherein at least one of the additional cutting edges has an extension that is different from the extension of the first and the second cutting edges, such that, when the milling tool is rotated around its longitudinal axis, the at least one of the additional cutting edges forms a line of intersection in the central plane that is different from the first and second lines of intersection.

12. A milling tool according to any of the previous claims, wherein the first and the second cutting edges are arranged such that rotational trajectories thereof around the longitudinal axis jointly form an approximation of a cylindrical surface.

13. A milling tool according to claim 11, wherein the at least one of the additional cutting edges is arcuate, and wherein the first, the second and the at least one of the additional cutting edges are arranged such that rotational trajectories thereof around the longitudinal axis jointly form an approximation of a cylindrical surface.

14. A milling tool according to any of the previous claims, wherein the first cutting portion comprises a nominal cutting edge that, when the milling tool is rotated around its longitudinal axis, forms a nominal line of intersection in the central plane.
